# EUROPÄISCHE PATENTANMELDUNG

(11) **EP 1 156 236 A1**
(43) Veröffentlichungstag der Anmeldung: **21.11.2001**
(21) Anmeldenummer: 01111399.0
(22) Anmeldetag: 10.05.2001
(51) Int. Cl.: F16H 61/02

(54) **Verfahren und Vorrichtung zum Steuern eines Bereichsgetriebes**

(30) Priorität: 16.05.2000 DE 10024024
(71) Anmelder: MAN Nutzfahrzeuge Aktiengesellschaft, 80976 München (DE)
(72) Erfinder: Drimml, Peter, 85757 Karlsfeld (DE); Kozel, Peter, 85235 Odelzhausen (DE); Schaller, Karl Viktor Dr., 82194 Gröbenzell (DE)

(57) **Zusammenfassung**

Verfahren für einen Schaltvorgang für ein handschaltbares Getriebe in einem Nutzfahrzeug, mit einem Vielgangschaltgetriebe, das mindestens aus einem Hauptgetriebe (14) und einem Bereichsgetriebe (17) besteht, mit einer Einfach-H-Schaltung am Handschalthebel (20) mit dem die Gänge des Hauptgetriebes schaltbar sind und mit einem Schalter (22) für das Bereichsgetriebe, der beispielsweise als Wippschalter am Handschalthebel angeordnet ist und mit dem eine langsame Stufe (v_{L}) und eine schnelle Stufe (v_{S}) des Bereichsgetriebes schaltbar ist, mit einer mechanischen oder hydrostatischen, gegebenenfalls pneumatisch unterstützen Getriebeschalteinrichtung (17) für das Hauptgetriebe und einem elektropneumatisch schaltbaren Bereichsgetriebe, mit einer Ganganzeige, die bei Fahrt des Fahrzeuges den eingelegten Gang anzeigt und mit einem Bordrechener (19), dadurch gekennzeichnet, dass bei Unterschreiten einer bestimmten unteren Mindestgeschwindigkeit (v₁ₘᵢₙ) des Fahrzeuges, und wenn der Handschalthebel in Neutralposition und die schnelle Stufe (v_{S}) im Bereichsgetriebe (15) geschaltet ist, ohne Zutun des Fahrzeugführers, durch Signale aus dem Bordrechner (19), die langsame Stufe (v_{L}) des Beriechsgetriebes (15) eingelegt wird und ein darauf folgender Anfahrvorgang in dem vom Fahrzeugführer mit dem Handschalthebel geschalteten Gang im Hauptgetriebe und mit der langsame Stufe (v_{L}) im Bereichsgetriebe (15) erfolgt.

## Beschreibung

Die Erfindung betrifft ein Verfahren und eine Vorrichtung nach dem Oberbegriff der Ansprüche 1 und 5.

Aus der DE 199 46 334 A1 ist ein Kraftfahrzeug mit einem Vielgangschaltgetriebe bekannt, bei dem bei der Wahl eines für die Fahrsituation ungeeigneten Ganges, insbesondere beim Anfahren mit einem ungeeigneten Gang, ein Warnsignal vor dem Fahren ausgelöst wird.

Das genannte Kraftfahrzeug bzw. die Einrichtung hat zwar den Vorteil, dass ein Abwürgen des Motors durch eine falsche Gangwahl beim Anfahren nicht auftritt, aber es muss ja bereits der falsche Gang eingelegt sein, damit die Wameinrichtung ein Signal abgeben kann. Es muss dann erst der richtige Gang eingelegt werden, damit man anfahren kann.

Dies kostet Zeit und ist nicht sehr praxisgerecht.

Handschaltbare, mit mechanischem oder hydrostatischem Schaltmechanismus ausgerüstete Getriebeschalteinrichtungen haben gegenüber automatisierten oder mit Joy-Stick schaltbaren Getriebeschalteinrichtungen immer noch den Vorteil, dass sie dem Fahrzeugführer in seinem Schaltverhalten mehr persönliche Freiheit geben. Dies mag auch ein Grund dafür sein, dass Handschaltgetriebe den überwiegenden Marktanteil haben und bei den Fahrzeugführern sehr beliebt sind.

Der Erfindung liegt die Aufgabe zugrunde, bei einem handschaltbaren Vielgangschaltgetriebe mit einer Einfach-H-Schaltung ein Verfahren zu finden, mit dem ein Verschalten beim Anfahrvorgang des Fahrzeuges vermieden wird.

Die Aufgabe wird erfindungsgemäß durch die Merkmale des Anspruches 1 gelöst.

Dadurch, dass bei Unterschreiten einer unteren Mindestgeschwindigkeit v₁ₘᵢₙ des Fahrzeuges und wenn der Handschalthebel in Neutralposition ist und noch die schnelle Bereichsgruppe geschaltet ist, automatisch durch Signale aus dem Bordrechner die langsame Bereichsgruppe geschaltet wird, ist ein anschließendes Anfahren nur in der langsamen Bereichsgruppe möglich. Die eingestellte Stellung am Schalter für das Bereichsgetriebe wird dabei von dem Bordrechner ignoriert.

Damit wird dem Vorgang Rechnung getragen, dass bei einem Rollvorgang an z. B. eine Ampel oder an einen Stau, der eingelegte Gang im Hauptgetriebe vom Fahrzeugführer herausgenommen und der Handschalthebel in Neutralstellung gebracht wird. Bei dieser Aktion vergisst der Fahrzeugführer häufig, den Schalter für das Bereichsgetriebe von der schnellen Schaltstufe v_{S} auf die langsame Stufe v_{L} umzuschalten. Oft ist auch nicht absehbar, wie weit man herunterbremsen muss.

Wenn das Fahrzeug zum Stillstand gebracht werden muss, so wird, wie erwähnt, automatisch durch Signale aus dem Bordrechner die langsame Stufe des Bereichsgetriebes, wenn v₁ₘᵢₙ unterschritten wird, also noch im Rollvorgang des Fahrzeuges, die langsame Stufe des Bereichsgetriebes eingelegt. Die Fahrgeschwindigkeit v₁ₘᵢₙ beträgt etwa 4 bis 9 km/h und kann variieren bzw. entsprechend im Bordrechner gespeichert sein, je nach Fahrzeugtyp oder Fahrzeugart.

Der Fahrzeugführer schaltet beim Anfahren mit dem Handschalthebel den entsprechenden Hauptgang, z. B. den ersten, zweiten oder dritten Gang, wobei in der Bereichsgruppe die langsame Stufe v_{L} eingelegt ist. Damit kann er den Dieselmotor nicht mehr abwürgen. Ein unbeabsichtigter Versuch mit dem falschen Gang wegzufahren, bleibt ihm damit erspart.

Ein weiterer Vorteil, dass noch bei fahrendem Fahrzeug geschaltet wird, ist, dass der Schaltvorgang weich bis nicht bemerkbar abläuft und nicht, wie dies bei einem stehenden Fahrzeug geschehen könnte, dass im Bereichsgetriebe Zahn auf Zahn der Zahnräder steht und eine Schaltung so nicht durchführbar ist.

Der Fahrzeugführer kann einen weiteren Vorteil der Erfindung nutzen, wenn sein Fahrzeug leer oder wenig beladen ist. Wenn er beispielsweise im dritten Gang wegfahren kann und dadurch die Fahrzeuggeschwindigkeit v₂ₘᵢₙ, die z. B. 15 km/h betragen kann, überschreitet, wird beim Einlegen des vierten Ganges im Hauptgetriebe, ohne sein Zutun durch Signale aus dem Bordrechner, auch die schnelle Stufe v_{S} des Bereichsgetriebes geschaltet, so dass dadurch dann der achte Gang eingelegt ist. Der Fahrzeugführer kann aber auch den Handschalthebel aus dem dritten Gang in die Neutralposition und dann wieder in den dritten Gang bringen, so dass dadurch dann der siebte Gang eingelegt ist. In beiden Fällen erspart er sich Schaltarbeit und das Fahrzeug verbraucht weniger Treibstoff.

Wenn das Fahrzeug nicht zum Stillstand kommt, so wird, abhängig von der Fahrzeuggeschwindigkeit, ob sie die untere Mindestgeschwindigkeit v₁ₘᵢₙ unterschreitet oder durch z. B. die Straßenführung (Gefälle) und die Verkehrslage die obere Mindestgeschwindigkeit v₂ₘᵢₙ wieder überschreitet, die langsame Stufe v_{L} oder die schnelle Stufe v_{S} des Bereichsgetriebes automatisch geschaltet.

In beiden genannten Fällen ist der jeweilige Schaltvorgang richtig, da bei niedriger Geschwindigkeit, wenn v (Fahrzeug) < v₁ₘᵢₙ ist, die langsame Schaltstufe v_{L} des Bereichsgetriebes und wenn v (Fahrzeug) > v₂ₘᵢₙ ist, die schnelle Stufe des Bereichsgetriebes geschaltet ist, was in beiden Fällen für die Weiterfahrt richtig ist. Voraussetzung hierfür ist, wie bereits erwähnt, dass der Handschalthebel in der Neutralposition ist, gebracht wird, oder durch einen Schaltvorgang durch die Neutralposition geführt wird.

Die aufgezeigten automatischen Schaltvorgänge werden vorteilhafterweise in einem Ganganzeigedisplay sichtbar gemacht. Sehr geeignet haben sich dabei blinkende Symbole gezeigt, weil der Fahrer blinkenden Symbolen große Aufmerksamkeit widmet. Die blinkenden Symbole sollen aber nur dann aufleuchten, wenn die Schaltstellung des Bereichsgetriebeschalters am Handschalthebel nicht übereinstimmt mit der durch den Bordrechner geschalteten Schaltstufe v_{S}, v_{L} im Bereichsgetriebe. Die blinkenden Symbole erlöschen, wenn der Fahrzeugführer entweder den Schalter für das Bereichsgetriebe am Handschalthebel bedient oder so lange blinken lässt, bis seine Fahrzeuggeschwindigkeit über die obere Mindestgeschwindigkeit v₂ₘᵢₙ, z. B. 16 km/h, kommt, weil ab hier bereits mit der schnellen Stufe v_{S} des Bereichsgetriebes das Fahrzeug fahrbar ist, abhängig vom Beladungszustand und der Fahrbahnführung.

Wenn bei einem Anfahrvorgang, hier ist ja automatisch die langsame Stufe v_{L} des Bereichsgetriebes eingelegt, in z. B. dem dritten Gang weggefahren werden kann, weil das Fahrzeug nicht beladen ist oder der Sattelschlepper ohne Auflieger fährt, und wenn die obere Mindestgeschwindigkeit v₂ₘᵢₙ überschritten wird, wird bei dem nächsten Schaltvorgang für das Hauptgetriebe automatisch durch Signale aus dem Bordrechner die schnelle Stufe v_{S} des Bereichsgetriebes geschaltet. Dieser Vorgang erspart Zeit, Schaltarbeit und Treibstoff.

Das erfindungsgemäße Verfahren erhält auch das persönliche Schaltverhalten des Fahrzeugführers.

Die Schaltung des Splitgetriebes geschieht unabhängig von dem erfindungsgemäßen Verfahren.

In der Zeichnung ist schematisch ein Beispiel einer Vorrichtung dargestellt, die einen automatischen Schaltvorgang ermöglicht.

Es zeigen:
- Fig. 1: eine Anordnung,
- Fig. 2: einen Schalthebel,
- Fig. 3: Schalthebelpositionen und zugeordnete Gänge.

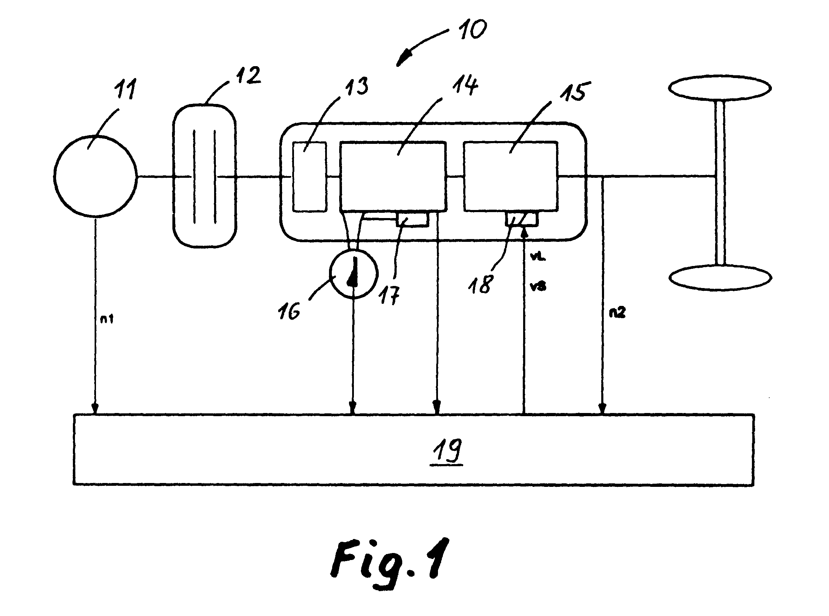

Die Fig. 1 zeigt ein Schema der Vorrichtung 10. Durch das Signal n₂, das die Drehzahl der Getriebeausgangswelle ist, weiß der Bordrechner 19 die Fahrzeuggeschwindigkeit. Von der Handschalteinrichtung 16 wird ein Signal an den Bordrechner 19 über die Schalthebelposition A, B, C, D, E, F gegeben. Das Hauptgetriebe 14 ist durch die Handschalteinrichtung 16 mit einer pneumatischen Unterstützung 17 schaltbar.

Das Bereichsgetriebe 15 wird durch Signale, die von der Handschalteinrichtung 16 durch den Schalter 22 am Handschalthebel 20 kommen, über den Bordrechner 19 geschaltet.

Erfindungsgemäß wird nun, wenn eine untere Mindestgeschwindigkeit v₁ₘᵢₙ des Fahrzeuges unterschritten wird, und die Handschalthebelposition in Neutralposition E, F, ist oder durch die Neutralposition E, F hindurchgeführt wird und der Schalter 22 zum Schalten der Bereichsgruppe 15 noch auf die schnelle Stufe v_{S} des Bereichsgetriebes 15 gestellt ist, dieses Signal vom Bordrechner 19 ignoriert. Der Bordrechner 19 gibt dann eigenmächtig Signale aus, so dass mit der elektropneumatischen Stelleinrichtung 18 die langsame Stufe v_{L} des Bereichsgetriebes 15 geschaltet wird. Wenn anschließend ein Anfahrvorgang mit dem Fahrzeug erfolgt, ist somit bereits die richtige (langsame) Stufe v_{L} des Bereichsgetriebes 15 eingelegt.

Wenn nun beim weiteren "Hinaufschalten" eine obere Mindestgeschwindigkeit v₂ₘᵢₙ, z. B. 18 km/h, überschritten wird und wenn der Handschalthebel 20 durch die Neutralposition E, F bewegt wird, durch Signale aus dem Bordrechner 19 die schnelle Stufe v_{S} im Bereichsgetriebe 15 geschaltet.

Wenn das Fahrzeug nicht zum Stillstand kommt, z. B. Rollvorgang bergab, und wenn der Handschalthebel 20 weiterhin in der Neutralposition E, F ist, wird durch Signale aus dem Bordrechner 19 wieder die schnelle Stufe v_{S} des Bereichsgetriebes 15 eingelegt.

Bei allen genannten Schaltvorgängen kann die Kupplung 12 geöffnet oder geschlossen sein. Drehzahlunterschiede im Getriebe können z. B. über Synchronringe durchgeführt werden, weil die genannten Schaltvorgänge nur dann erfolgen, wenn die Position des Handschalthebels 20 in der Neutralposition E, F ist oder durch diese hindurchgeführt wird. Durch die Stellung Neutralposition E, F im Hauptgetriebe 14 wird der Kraftfluss des Antriebsmotors 11 nur bis einschließlich Splitgetriebe 13 geleitet.

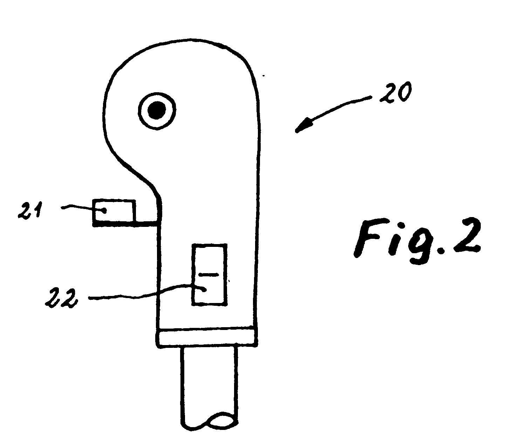

Die Fig. 2 zeigt den Handschalthebel 20, den Bereichsgetriebeschalter 22 und den Splitschalter 21.

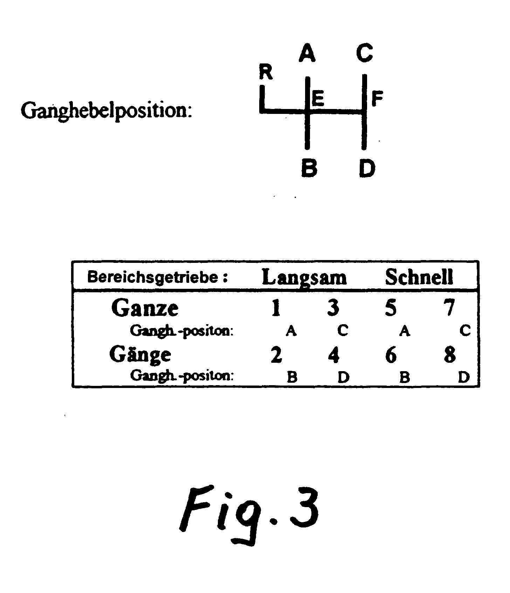

Die Fig. 3 zeigt die möglichen Schaltpositionen A, B, C, D einer Einfach-H-Schaltung und die Neutralposition E, F. Die Tabelle zeigt die Gänge, die in den einzelnen Schaltpositionen A, B, C, D schaltbar sind.

## Patentansprüche

1. Verfahren für einen Schaltvorgang für ein handschaltbares Getriebe in einem Nutzfahrzeug, mit einem Vielgangschaltgetriebe, das mindestens aus einem Hauptgetriebe und einem Bereichsgetriebe besteht, mit einer Einfach-H-Schaltung am Handschalthebel, mit dem die Gänge des Hauptgetriebes schaltbar sind und mit einem Schalter für das Bereichsgetriebe, der beispielsweise als Wippschalter am Handschalthebel angeordnet ist und mit dem eine langsame Stufe (v_{L}) und eine schnelle Stufe (v_{S}) des Bereichsgetriebes schaltbar ist, mit einer mechanischen oder hydrostatischen, gegebenenfalls pneumatisch unterstützten Getriebeschalteinrichtung für das Hauptgetriebe und einem elektropneumatisch schaltbaren Bereichsgetriebe, mit einer Ganganzeige, die bei Fahrt des Fahrzeuges den eingelegten Gang anzeigt und mit einem Bordrechner, **dadurch gekennzeichnet, dass** bei Unterschreiten einer bestimmten unteren Mindestgeschwindigkeit (v₁ₘᵢₙ) des Fahrzeuges, und wenn der Handschalthebel in Neutralposition und die schnelle Stufe (v_{S}) im Bereichsgetriebe (15) geschaltet ist, ohne Zutun des Fahrzeugführers, durch Signale aus dem Bordrechner (19), die langsame Stufe (v_{L}) des Bereichsgetriebes (15) eingelegt wird und ein darauf folgender Anfahrvorgang in dem vom Fahrzeugführer mit dem Handschalthebel geschalteten Gang im Hauptgetriebe und mit der langsamen Stufe (v_{L}) im Bereichsgetriebe (15) erfolgt.

2. Verfahren nach Anspruch 1, **dadurch gekennzeichnet, dass**, wenn das Fahrzeug nicht zum Stillstand kommt und der Handschalthebel in Neutralposition ist, und wenn die untere Mindestgeschwindigkeit (v₁ₘᵢₙ) unterschritten wird, die langsame Stufe (v_{L}) des Bereichgetriebes, und wenn die obere Mindestgeschwindigkeit (v₂ₘᵢₙ) überschritten wird (Rollvorgang bergab), ohne Zutun des Fahrers wieder die schnelle Stufe (v_{S}) des Bereichsgetriebes eingelegt wird.

3. Verfahren nach den Ansprüchen 1 und 2, **dadurch gekennzeichnet, dass** die Schaltvorgänge im Ganganzeigedisplay, beispielsweise durch blinkende Symbole anzeigbar sind und diese Symbole erlöschen, wenn die Schaltstellung des Schalters (22) für die Bereichsgruppe mit der aktuell eingestellten Stufe (v_{L}, v_{S}) des Bereichsgetriebes (15) übereinstimmt.

4. Verfahren nach einem oder mehreren der vorhergehenden Ansprüche, **dadurch gekennzeichnet, dass** bei einem Anfahrvorgang, bei dem im Anfahrgang die obere Mindestgeschwindigkeit (v₂ₘᵢₙ) überschritten wird und der Schalter (22) am Handschalthebel (20) noch in der Position für die schnelle Stufe (v_{S}) des Bereichsgetriebes (15) steht, bei der Schaltung des nächsten Ganges mit dem Handschalthebel (20), dadurch, dass der Handschalthebel durch die Neutralposition gebracht wird, automatisch die schnelle Stufe (v_{S}) im Bereichsgetriebe (15) eingelegt wird.

5. Vorrichtung für einen Schaltvorgang für ein handschaltbares Getriebe in einem Nutzfahrzeug, mit einem Vielgangschaltgetriebe, das mindestens aus einem Hauptgetriebe und einem Bereichsgetriebe besteht, mit einer Einfach-H-Schaltung zum Schalten des Hauptgetriebes und einem Schalter am Schalthebel zum Schalten der Bereichsgruppe, die mit einer Schalteinrichtung zum Ausführen eines Schaltbefehls verbunden ist, mit einer Geschwindigkeitsbestimmungseinrichtung und mit einem Bordrechner, **dadurch gekennzeichnet, dass**, wenn eine untere Fahrzeuggeschwindigkeit (v₁ₘᵢₙ) unterschritten wird und der Handschalthebel (20) in Neutralposition (E, F) ist, durch Signale aus dem Bordrechner (19) die langsame Stufe (v_{L}) des Bereichsgetriebes (15) durch die Schalteinrichtung (18) eingelegt wird und der Schaltbefehl des Schalters (22) für das Schalten des Bereichsgetriebes (15) ignoriert wird, wenn dieser auf die schnelle Schaltstufe (v_{S}) gestellt ist und solange ignoriert bleibt, bis eine obere Mindestgeschwindigkeit (v₂ₘᵢₙ) überschritten wird und dann durch Signale aus dem Bordrechner (19) die schnelle Stufe (v_{S}) geschaltet wird, wenn der Schalthebel (20) in der Neutralposition (E, F) geblieben ist oder nach einem Anfahrvorgang über die Neutralposition E, F hinwegbewegt wird.
